# EUROPEAN PATENT SPECIFICATION

(11) **EP 4 178 887 B1**
(45) Date of publication and mention of the grant of the patent: **10.04.2024**
(21) Application number: 21736391.0
(22) Date of filing: 01.07.2021
(51) Int. Cl.: B65G 15/14, B65G 47/08, B65B 11/46, B65G 47/68, B65B 11/40, B65B 35/24

(54) **DEVICE FOR FEEDING AND ARRANGING SOLID FOOD PRODUCTS**
VORRICHTUNG ZUM ZUFÜHREN UND ANORDNEN VON FESTEN NAHRUNGSMITTELN
DISPOSITIF D'ALIMENTATION ET DE RANGEMENT DE PRODUITS ALIMENTAIRES SOLIDES

(30) Priority: 08.07.2020 IT 202000016465
(43) Date of publication of application: 17.05.2023
(73) Proprietor: I.M.A. Industria Macchine Automatiche S.p.A., 40064 Ozzano dell'Emilia (BO) (IT)
(72) Inventor: ESCUDERO CUBILLO, Hector, 40064 Ozzano dell'Emilia (Bologna) (IT)
(74) Representative: Milli, Simone
(86) International application number: PCT/IB2021/055899
(87) International publication number: WO 2022/009033

(56) References cited:
- EP-A1- 2 792 625
- WO-A1-2020/109905
- DE-U1- 29 617 281
- US-A- 3 190 434
- US-A- 3 333 676
- US-A- 3 805 484

## Description

### Technical field

This invention relates to a device for feeding and arranging solid food products.

In particular, the device is aimed at a machine for packaging solid products, that is to say, products in the form of pressed stock cubes, such as those with a cubic or polyhedral shape.

### Background art

The machines for packaging solid food products currently comprise, along a feed line:
- a press for compressing the products, starting from a corresponding granular material, configured for feeding individual products (preferably in continuous sequence);
- a device for feeding and arranging products configured for positioning the individual products according to at least one row and, subsequently, for spacing the products from each other before their wrapping (of particular interest in this specification);
- an apparatus for wrapping the product in a respective wrapper configured for picking up individual products from the device for feeding and arranging products and for wrapping the product, with a piece or sheet of film, by folding a sheet about a corresponding product; this apparatus moves intermittently during the steps for processing the product.

The devices for feeding and arranging products such as pressed stock cubes generally comprise groups of guides for conveying and channelling the products and means configured for the relative longitudinal spacing between the individual products advancing towards the wrapping apparatus located downstream relative to the feed line.

This device for feeding and arranging products is an extremely delicate and important station for the entire machine, since:
- it must adapt the various functional features of the machine, that is to say, it must compensate and make safe the feeding of the products between the press (which operates in a continuous cycle and with a feeding of the products which may be generally high, but with continuous variations of the number of products arriving) and the wrapping apparatus (which operates in a regular and step by step fashion, that is to say, with a productivity less than the press);
- it must allow a correct spacing between the products in succession before the products are picked up from the wrapping apparatus.

All these requirements make the current feed devices extremely complex and large in size.

This results in drawbacks due to an extremely long and bulky overall machine layout, a high cost of the device as a whole and the format "rigidity" of the feeding device with respect to the machine.

The current feeding devices are made for processing products according to a well-defined type of packaging.

In practice, the current feed devices are designed for packaging a single product in an individual package, even if the machine downstream may already be set up for a greater flexibility of use, that is to say, for packaging multiple products (at least two) inside an individual package. The need is therefore felt in the sector to provide a device for feeding products which is particularly flexible in use or operation, and such as to allow machine lines to be obtained, in which the device is used, which are equally flexible to use. WO2020/109905A1 discloses a device according to the preamble of claim 1.

### Aim of the invention

The aim of the invention is to provide a device for feeding and arranging solid food products which overcomes the above-mentioned drawbacks of the prior art.

More specifically, the aim of the invention is to provide a device for feeding and arranging solid food products which is able to facilitate a fast size changeover, that is to say, packaging multiple products of the machine line.

A further aim of the invention is to provide a device for feeding and arranging solid food products which is able to maintain a high productivity and a operational flexibility in reduced machine dimensions.

Said aims are fully achieved by the device for feeding and arranging solid fed products according to the invention as characterised in the appended claims.

### Brief description of the drawings

These and other features of the invention will become more apparent from the following detailed description of a preferred, non-limiting embodiment of it, with reference to the accompanying drawings, in which:
- Figure 1 is a schematic plan view of a machine for packaging solid food products having a device for feeding and arranging solid food products according to the invention;
- Figure 2 is a schematic scaled-up plan view with respect to Figure 1 of the device for feeding and arranging solid food products according to the invention;
- Figure 3 is an enlarged detail of Figure 2;
- Figure 4 is a schematic side view of an enlarged detail relative to Figure 2, in particular the zone of spacing the pair of solid food products for their insertion in a wrapping apparatus.

### Detailed description of preferred embodiments of the invention

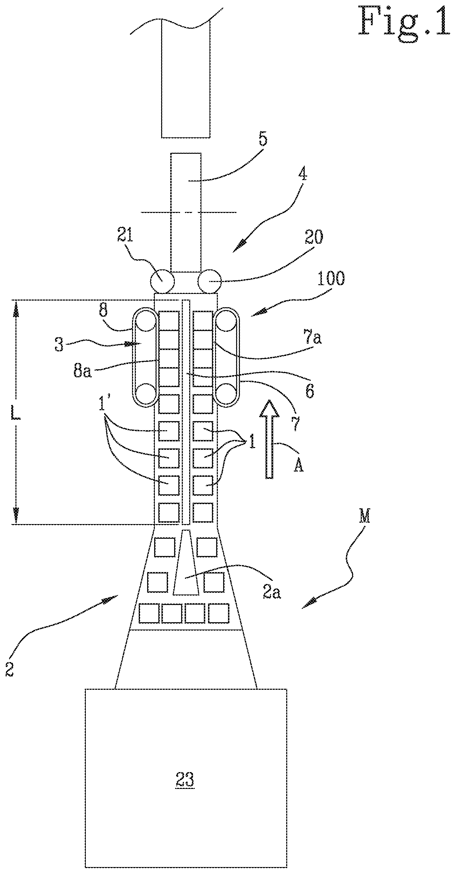

With reference to the accompanying drawings, and in particular with reference to Figure 1, the device for feeding and arranging solid food products, labelled 100 in its entirety, is inserted in machines for packaging solid food products 1.

More specifically, these solid food products 1 may be pressed stock cubes with a cubic or parallelepiped shape.

As illustrated, the machine M may comprise, along a relative line of extension and along a direction A for feeding a press 23 for compressing products, starting from a granulated material, configured for producing and feeding, continuously, individual solid food products 1 (the press is illustrated with a block).

As illustrated, the machine M comprises a motor-driven conveyor 2 for accumulating and conveying the solid food products 1 (arriving from the press 23).

The conveyor 2 is equipped with walls 2a for guiding the solid food products 1 in such a way as to arrange the solid food products 1 in single rows.

Again as illustrated, the machine comprises a unit 3 for controlled transit of the solid food products 1 arriving from the motor-driven conveyor 2 for accumulating and conveying the solid food products 1.

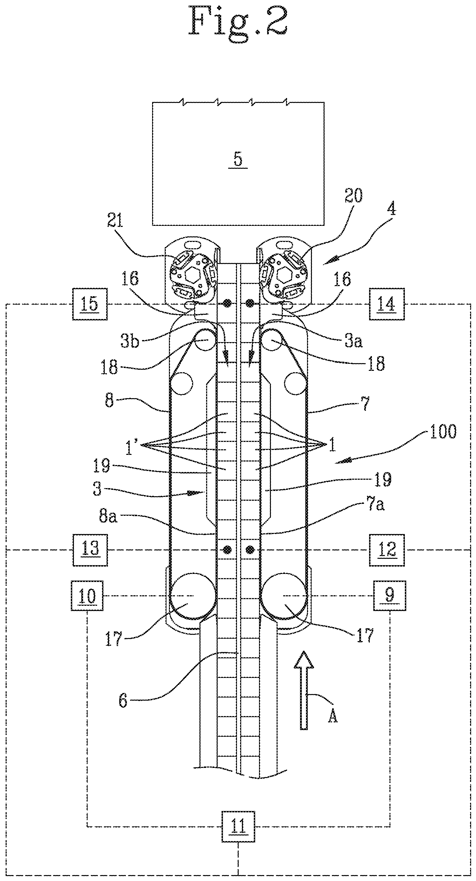

The transit unit 3 defines a transit path along the direction A for feeding the solid food products 1 from a first inlet end to a second outlet or release end of the solid food products 1 (see also Figure 2).

Moreover, the machine comprises means 4 for spacing solid food products 1 positioned close to and downstream of the outlet or release end of the transit unit 3.

In light of this, the spacing means 4 are designed for spacing the solid food products 1 which are at the end of the remaining solid food products 1 in transit along the path of the transit unit 3, in such a way as to allow a feeding of a pair of solid food products 1 alongside each other to a wrapping apparatus 5 (the latter illustrated with a block in Figures 1 and 2). As illustrated, the transit unit 3 comprises a stationary panel 6 extending at least between the first inlet end and the second outlet or release end of the solid food products 1 from the transit unit 3, and parallel to the feed direction A.

Again as illustrated, the transit unit 3 comprises a first 7 and a second 8 pulling belt comprising a first 7a and a second 8a active branch positioned parallel facing each other and at the opposite sides of the panel 6 and forming with the latter a respective first 3a and a second 3b transit channel for a respective row of solid food products 1, 1'.

In light of this, each first 7a and second 8a active branch pulls the respective row of solid food products 1, 1' in a sliding fashion against the panel 6.

Moreover, each first belt 7 and second 8 belt has an autonomous independent drive unit 9 and 10.

The transit unit 3 also comprises a control unit 11 connected to the independent drive units 9, 10 of the first 7 and of the second 8 belt and able to modify the respective feed speeds of the first 7 and second 8 belt, in such a way as to allow the controlled feeding of the respective row of solid food products 1, 1' transiting in the respective first 3a and second 3b channel.

Moreover, the control unit 11 is programmed in such a way that the solid food products 1, 1' which are at the end of the respective row are placed with a respective front surface on a common vertical plane, at least close to the spacing means 4.

In other words, the device, that is to say, the transit unit 3, is configured to allow a controlled feeding of two parallel rows of products thanks to the presence of the panel 6 which acts as dividing element against which the products made to advance from the active branches of the belts slide.

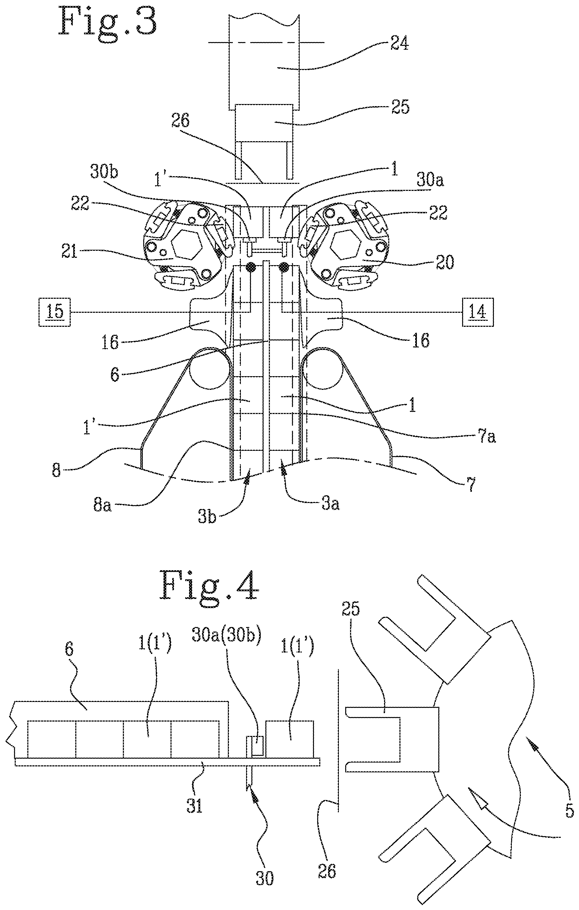

The machine M further comprises an element 30 for pushing the pair of solid food products 1, 1' arranged side by side, positioned close to the spacing means 4 (see Figures 2 and 4). The pushing element 30 comprises an insertion device which intercepts the pair of solid food products 1, 1' arranged side by side and spaced by the spacing means 4 for pushing it towards the wrapping apparatus 5 in synchrony with the latter.

Preferably, this insertion device 30 comprises a pushing head 30a, 30b for each product 1, 1' forming the pair of products spaced by the spacing means 4. These pushing heads 30a, 30b are connected to a kinematic system (not illustrated) which is able to move the two heads 30a and 30b in synchrony to bring them into contact simultaneously, respectively, with each solid food product 1, 1' forming said pair, so as to insert the pair in the wrapping apparatus 5.

As illustrated, each row of products 1, 1' is supported at the bottom by respective lower guides 31 spaced from each other in such a way as to allow the passage of the pushing heads 30a, 30b close to the spacing means 4 (see dashed line in Figures 2 and 3 and Figure 4).

This allows a machine to be configured with the possibility of obtaining an individual package with two products simultaneously, in the case of stock cubes the double cube is formed, without having to reconfigure the entire machine in its entirety and maintaining the reduced dimensions of the feed line.

In particular, the machine according to the invention makes it possible to move forward two stock cubes arranged side by side forming a pair of stock cubes, in such a way as to arrive at the same moment in phase with the insertion device 30 without ever losing the control and timing between the two rows of stock cubes.

Preferably, the panel 6 is positioned equidistant relative to the first 7a and second 8a active branch.

Preferably, the panel 6 has an extension, in length L, which is greater than the transit path (defined by the two active branches of the belts).

Preferably, the panel 6 is interrupted at the spacing means 4. It should be noted that the control unit 11 comprises a first 12 and a second 13 sensor for detecting its position along the first 3a and second 3b channel and which is able to detect the position of each solid food product 1, 1' which passes through the first 3a and the second (3b) channel.

In light of this, the first 12 and second 13 sensors are positioned close to the inlet end of the path defined by the respective first 3a and second 3b channel.

Preferably, the control unit 11 comprises a third 14 and a fourth 15 sensor for detecting the position downstream of the outlet or release end, and which is able to detect the position of each solid food product 1, 1' at the outlet from the first 3a and second 3b channel.

In this way, the control unit 11 which controls the respective speeds of the first and second belts 7 and 8 (thanks to the two pairs of sensors) is designed to always bring a pair of solid food products 1, 1' to be wrapped at the insertion device 30 in the correct position.

In turn, the insertion device 30 is in phase with the wrapping apparatus 5.

It should be noted that the control unit 11 also controls, that is to say, is connected to, the spacing means 4 for a precise phase coordination between:
- arrival of pairs of solid food products 1, 1' close to the spacing means 4;
- detaching of the same pair of solid food products 1, 1' from the rows of solid food products 1, 1' being fed;
- contact with thrust of the pair of solid food products 1, 1' by the insertion device 30 towards the packaging apparatus 5.

Thanks to this control structure, in particular to the presence of the two pairs of sensors 12, 13 and 14, 15, the feeding and the position of each solid food product 1, 1' along each channel 3a and 3b and up to the spacing means 4 is constantly checked in such a way as to keep a precise synchronism between each row of products 1, 1' being fed and a receiving position of the wrapping apparatus 5.

The logic for controlling and operating the transit unit 3 comprises:
- detecting each individual product advancing in each channel 3a and 3b defined by the first and second belts 7 and 8 and by the panel 6 by the first and second sensors 12 and 13 so as to send a corresponding signal to the unit 11 corresponding to the position of the product in transit, so as to determine the presence or absence of product as well as the exact position of each product 1 and 1' in the corresponding channel 3a and 3b and, therefore, be able to modify, if necessary, the feed speed of the first and/or second belt 7 and 8 which pulls the respective row of products 1, 1'. If no product is detected in transit through one of the two channels, the device may be stopped.

The modification of the speed of the belts independently is performed as a function of the exact time of arrival of the products 1, 1' to the insertion device 30;
- detecting the position, preferably of the front wall of each pair of head products 1, 1', by the third and fourth sensors 14, 15 with the sending of a relative signal to the control unit 11 in such a way as to automatically calibrate the speed of the belts if the products of the head pair are not exactly aligned.

If the pair of head products arrives in phase with the movement of the insertion device 30, the control unit 11 does not perform any modification relative to the individual speeds of the first and/or the second belt 7 and 8. On the other hand, if the third or fourth sensor 14, 15 verify a position of the front wall of one or both of the products of the pair of products 1, 1' which is incorrect (in advance or delay relative to the insertion device 30 and therefore of the wrapping apparatus 5), the control unit 11 sends an appropriate signal to one or both of the drive units 9 and 10 of the first and/or the second belt 7, 8 for modifying the relative speed of the first and/or the second belt 7, 8 in such a way as to keep in phase the position of the pairs of products 1, 1' with the operating step of the wrapping apparatus 5. The device 100 also comprises a pair of pads 16, each positioned downstream of a corresponding first 7a and second 8a active branch of a respective first 7 and second 8 belt and upstream of the spacing means 4, relative to the feed direction A, in such a way as to define an extension of the first 3a and second 3b channel (together with the panel 6).

Each pad 16 has a surface of contact with corresponding and different solid food products 1, 1' feeding in the first 3a and second 3b channel and configured to slow down the corresponding solid food product 1, 1', by contact with the panel 6, closest to the spacing means 4.

In light of this, each solid food product 1, 1' is positioned between each pad 16 and a respective side of the panel 6 so as to define the extension of the first 3a and the second 3b channel.

It should be noted that the panel 6 extends beyond the first 7 and second 8 belt and towards the spacing means 4.

Preferably, the first and second belts 7 and 8 are closed in a loop around at least one pair of pulleys 17, 18 of which one is connected to the respective drive unit 9 and 10.

Between each pair of pulleys 17 and 18 of each first and second endless belt 7 and 8, there are contact elements 19 (for example plates) in contact with the belt 7 and 8, that is, on the corresponding inner side of the first active section 7a and the second 8a active branch.

The above-mentioned spacing means 4 (see also Figure 3) comprise at least one pair of wheels 20, 21 positioned on opposite sides to a zone for spacing pairs of solid food products 1, 1' placed side by side coming from the first 3a and second 3b channel.

Each wheel 20, 21 is equipped with at least one circumferential head 22 for contact with a lateral surface of the corresponding solid food product 1, 1' in such a way as to allow an acceleration in the feed movement of the pair of solid food products 1, 1' contacted by the two heads 22 in order to space the pair of solid food products 1, 1' in contact with the two heads 22 from the remaining solid food products 1, 1' in transit in the first 3a and second 3b channel defined by the first 7 and second 8 belt and by the panel 6.

Preferably, each wheel 20, 21 comprises at least two contact heads 22 distributed uniformly along the circumference of each wheel 20, 21.

Each head 22 is configured to adapt radially at the contact with the corresponding solid food product 1, 1' (by compressing an elastic element) and releasing the product through a return to the initial position again through the pushing action of the elastic element during rotation of the wheel 20, 21.

The elastic compression of the heads 22 allows the pair of food products 1, 1' to remain in stable mutual contact with their respective lateral surface during the movement towards the wrapping apparatus 5.

By way of a non-limiting example, the wrapping apparatus 5 (see Figure 3) comprises a rotary carousel equipped with a plurality of radial arms 24 each having an end 25 configured to house a pair of solid food products 1, 1' to be wrapped in a single piece 26 of film.

The carousel is positioned facing the means 4 for spacing the pairs of solid food products 1, 1' in such a way as to have, in sequence, an end terminal 25 at the means 4 for spacing the solid food products 1, 1' for receiving the pair of solid food products.

It should be noted that the single piece 26 of film is fed along a direction transversal to the feed direction A and is interposed between the pair of solid food products 1, 1' and the end 25 for receiving both the solid food products 1, 1' and the piece of film 26.

Thanks to this device, the machine for packaging solid food products is highly flexible in making several formats inside a structure with reduced dimensions, with stations substantially similar both for individual packages and for multiple packages, whilst maintaining a high speed and final quality.

## Claims

1. A device for feeding and arranging solid food products (1) for a machine for packaging solid food products (1), in particular pressed stock cubes with a cubic or parallelepiped shape, said device (100) comprising:
- a motor-driven conveyor (2) for accumulating and conveying the solid food products (1);
- a transit unit (3) for controlled transit of the solid food products (1) arriving from the motor-driven conveyor (2) for accumulating and conveying the solid food products (1); the transit unit (3) defining a transit path along a feed direction (A) of the solid food products (1) from a first inlet end to a second outlet or release end of the solid food products (1);
- spacing means (4) for spacing the solid food products (1) which are close to and downstream of the outlet or release end of the transit unit (3); wherein the transit unit (3) comprises:
- a stationary panel (6) extending at least between the first inlet end and the second outlet or release end of the solid food products (1) and being parallel to the feed direction (A);
**characterised in that** the transit unit (3) further comprises:
- a first (7) and a second (8) pulling belt comprising a respective first (7a) and a second (8a) active branch positioned facing each other parallel with each other and at the opposite sides of the panel (6), forming with the panel a respective adjacent first (3a) and second (3b) transit channel for a respective row of solid food products (1, 1'), each first (7a) and second (8a) active branch being configured for pulling the respective row of solid food products (1, 1') in a sliding fashion against the panel (6); each first (7) and second (8) belt having an independent drive unit (9, 10);
- a control unit (11) connected to the independent drive units (9, 10) of the first (7) and of the second (8) belt and able to modify the respective feed speeds of the first (7) and second (8) belt, in such a way as to allow a controlled feeding of the respective row of solid food products (1, 1') transiting in the respective first (3a) and second (3b) channel, said control unit (11) being programmed in such a way that the solid food products (1, 1') which are at the end of the respective row are placed with a respective front surface lying on a common vertical plane, so as to allow the spacing means (4) to simultaneously space a pair of solid food products (1, 1') facing each other and coming from the first (3a) and from the second (3b) channel.

2. The device according to claim 1, wherein the panel (6) is positioned equidistant relative to the first (7a) and second (8a) active branch of the first (7) and second (8) pulling belt, respectively.

3. The device according to claim 1 or 2, wherein the extension, in length (L) of the panel (6) is greater than the length of the transit path.

4. The device according to any one of the preceding claims, wherein the control unit (11) comprises a first (12) and a second (13) sensor for detecting its position along the first (3a) and second (3b) channel, respectively, and which is able to detect the position of each solid food product (1, 1') which passes through, respectively, the first (3a) and the second (3b) channel.

5. The device according to claim 4, wherein said first (12) and second (13) sensors are positioned close to the first inlet end of the path defined by the respective first (3a) and second (3b) channel.

6. The device according to any one of the preceding claims, wherein the control unit (11) comprises a third (14) and a fourth (15) sensor for detecting the position close to the outlet or release end from the first (3a) and second (3b) channel, respectively, and which is able to detect the position of each solid food product (1, 1') at the outlet or release end from the first (3a) and second (3b) channel, respectively.

7. The device according to any one of the preceding claims, comprising a pair of pads (16), each pad (16) of said pair of pads being positioned downstream and in extension of the first (7a) and second (8a) active branches of the first (7) and second (8) belt, respectively, and upstream of the spacing means (4) relative to the feed direction (A); each pad (16) having a surface configured and positioned to make contact with the solid food products (1, 1') leaving the first (3a) and second (3b) channel in order to slow down the feeding of the solid food product (1, 1'), by contrast with the panel (6).

8. The device according to any one of the preceding claims, wherein each first and second belt (7, 8) is closed in a loop around at least one pair of pulleys (17, 18) of which one pulley being connected to the relative drive unit (9, 10); contact elements (19) being positioned in contact with the belt (7, 8), on the inner side, that is, the side not in contact with the solid food products (1, 1'), of the first (7a) and second active branch (8a).

9. The device according to any one of the preceding claims, wherein the spacing means (4) comprise at least one pair of wheels (20, 21) positioned on opposite sides of a spacing zone; each wheel (20, 21) being equipped with a circumferential head (22) configured for making contact with a lateral surface of the pair of solid food products (1, 1') facing each other and coming from the first (3a) and from the second (3b) channel, in such a way as to accelerate the feed movement of the pair of solid food products (1, 1') contacted by the two heads (22) and space the pair of solid food products (1, 1') in contact with the two heads (22) from the other solid food products (1, 1') still in transit in the first (3a) and second (3b) channel.

10. The device according to any one of the preceding claims, wherein said panel (6) is interrupted at the spacing means (4).

11. The device according to any one of the preceding claims, comprising an element (30) for pushing the pair of solid food products (1, 1') placed side by side and coming from the first (3a) and second (3b) channel positioned close to the spacing means (4); said pushing element (30) being configured to intercept said pair of solid food products (1, 1') spaced by the spacing means (4) and pushing it towards a wrapping apparatus (5) in synchrony with the latter.

## Patentansprüche

1. Vorrichtung zum Zuführen und Anordnen von festen Nahrungsmitteln (1) für eine Maschine zum Verpacken fester Nahrungsmittel (1), insbesondere gepresster Brühwürfel mit einer Würfel- oder Parallelflächnerform, wobei die Vorrichtung (100) Folgendes umfasst:
- einen motorbetriebenen Förderer (2) zum Anstauen und Fördern der festen Nahrungsmittel (1);
- eine Durchgangseinheit (3) für den gesteuerten Durchgang der festen Nahrungsmittel (1), die vom motorbetriebenen Förderer (2) eingehen, um die festen Nahrungsmittel (1) anzustauen und zu fördern, wobei die Durchgangseinheit (3) einen Durchgangsweg entlang einer Zuführungsrichtung (A) der festen Nahrungsmittel (1) von einem ersten Einlassende zu einem zweiten Auslass- oder Freigabeende der festen Nahrungsmittel (1) definiert;
- Beabstandungsmittel (4), um die festen Nahrungsmittel (1) zu beabstanden, die sich in der Nähe zum und nach dem Auslass- oder Freigabeende der Durchgangseinheit (3) befinden,
wobei die Durchgangseinheit (3) Folgendes umfasst:
- ein stationäres Paneel (6), das sich zumindest zwischen dem ersten Einlassende und dem zweiten Auslass- oder Freigabeende der festen Nahrungsmittel (1) erstreckt und parallel zur Zuführungsrichtung (A) angeordnet ist, **dadurch gekennzeichnet, dass** die Durchgangseinheit (3) zudem Folgendes umfasst:
- ein erstes (7) und ein zweites (8) Zugband, das jeweils einen jeweiligen ersten (7a) und einen zweiten (8a) aktiven Abzweig umfasst, die einander zugewandt und parallel zueinander und an den entgegengesetzten Seiten des Paneels (6) positioniert sind, die mit dem Paneel einen jeweiligen angrenzenden ersten (3a) und zweiten (3b) Durchgangskanal für eine jeweilige Reihe von festen Nahrungsmittel (1, 1') bilden, wobei ein jeder erster (7a) und zweiter (8a) aktiver Abzweig ausgelegt ist, um die jeweilige Reihe von festen Nahrungsmitteln (1, 1') auf verschiebende Weise gegen das Paneel (6) zu ziehen, wobei das erste (7) und das zweite (8) Band jeweils eine unabhängige Antriebseinheit (9, 10) aufweisen;
- eine Steuereinheit (11), die mit den unabhängigen Antriebseinheiten (9, 10) des ersten (7) und des zweiten (8) Bands verbunden und in der Lage sind, die jeweiligen Zuführungsgeschwindigkeiten des ersten (7) und des zweiten (8) Bands so zu ändern, dass eine gesteuerte Zuführung der jeweiligen Reihe von festen Nahrungsmitteln (1, 1') erlaubt wird, die im jeweiligen ersten (3a) und zweiten (3b) Kanal durchlaufen, wobei die Steuereinheit (11) so programmiert ist, dass die festen Nahrungsmittel (1, 1'), die sich am Ende der jeweiligen Reihe befinden, so platziert werden, dass eine jeweilige Vorderseite auf einer gemeinsamen vertikalen Ebene liegt, sodass den Beabstandungsmitteln (4) erlaubt wird, simultan ein Paar fester Nahrungsmittel (1, 1') zu beabstanden, die einander zugewandt sind und vom ersten (3a) und vom zweiten (3b) Kanal eingehen.

2. Vorrichtung nach Anspruch 1, wobei das Paneel (6) gleichabständig relativ zum ersten (7a) und zweiten (8a) aktiven Abzweig jeweils des ersten (7) und zweiten (8) Zugbands positioniert ist.

3. Vorrichtung nach Anspruch 1 oder 2, wobei die Ausdehnung in der Länge (L) des Paneels (6) größer ist als die Breite des Durchgangswegs.

4. Vorrichtung nach einem der vorhergehenden Ansprüche, wobei die Steuereinheit (11) einen ersten (12) und einen zweiten (13) Sensor zum Erkennen deren Position jeweils entlang des ersten (3a) und zweiten (3b) Kanals umfasst, der jeweils in der Lage ist, die Position eines jeden festen Nahrungsmittels (1, 1') zu erkennen, das jeweils durch den ersten (3a) und den zweiten (3b) Kanal geführt wird.

5. Vorrichtung nach Anspruch 4, wobei der erste (12) und der zweite Sensor (13) in der Nähe des ersten Einlassendes des Wegs, der durch den jeweiligen ersten (3a) und zweiten (3b) Kanal definiert ist, positioniert sind.

6. Vorrichtung nach einem der vorhergehenden Ansprüche, wobei die Steuereinheit (11) einen dritten (14) und einen vierten (15) Sensor zum Erkennen der Position in der Nähe des Auslass- oder Freigabeendes jeweils vom ersten (3a) und zweiten (3b) Kanal umfasst, der jeweils in der Lage ist, die Position eines jeden festen Nahrungsmittels (1, 1') am Auslass- oder Freigabeende jeweils vom ersten (3a) und zweiten (3b) Kanal zu erkennen.

7. Vorrichtung nach einem der vorhergehenden Ansprüche, umfassend ein Paar Anschlagpuffer (16), wobei ein jeder Anschlagpuffer (16) des Paars von Anschlagpuffern nach dem und in Ausdehnung des ersten (7a) und zweiten (8a) aktiven Abzweigs jeweils des ersten (7) und zweiten (8) Bands und vor den Beabstandungsmitteln (4) relativ zur Zuführungsrichtung (A) positioniert ist, wobei ein jeder Anschlagpuffer (16) eine Oberfläche aufweist, die ausgelegt und positioniert ist, um den Kontakt zu den festen Nahrungsmitteln (1, 1') herzustellen, die den ersten (3a) und zweiten (3b) Kanal verlassen, um die Zuführung des festen Nahrungsmittels (1, 1') durch Kontrast mit dem Paneel (6) zu verlangsamen.

8. Vorrichtung nach einem der vorhergehenden Ansprüche, wobei sowohl das erste als auch das zweite Band (7, 8) in einer Schleife rund um mindestens ein Paar Riemenscheiben (17, 18) geschlossen sind, von denen eine Riemenscheibe mit der jeweiligen Antriebseinheit (9, 10) verbunden ist, wobei Kontaktelemente (19) in Kontakt mit dem Band (7, 8) auf der Innenseite positioniert sind, das heißt, dass die Seite nicht mit den festen Nahrungsmitteln (1, 1') des ersten (7a) und zweiten (8a) aktiven Abzweigs in Kontakt ist.

9. Vorrichtung nach einem der vorhergehenden Ansprüche, wobei die Beabstandungsmittel (4) mindestens ein Paar Räder (20, 21) umfassen, die auf entgegengesetzten Seiten einer Beabstandungszone positioniert sind, wobei ein jedes Rad (20, 21) mit einem umlaufenden Kopf (22) ausgestattet ist, der ausgelegt ist, um den Kontakt zu einer seitlichen Oberfläche des Paars von festen Nahrungsmitteln (1, 1') herzustellen, die einander zugewandt sind und vom ersten (3a) und vom zweiten (3b) Kanal eingehen, sodass die Zuführungsbewegung des Paars von festen Nahrungsmitteln (1, 1'), die von den beiden Köpfen (22) berührt werden, beschleunigt wird und das Paar von festen Nahrungsmitteln (1, 1') in Kontakt mit den beiden Köpfen (22) von den anderen festen Nahrungsmitteln (1, 1') beabstandet wird, die noch im ersten (3a) und zweiten (3b) Kanal durchlaufen.

10. Vorrichtung nach einem der vorhergehenden Ansprüche, wobei das Paneel (6) an den Beabstandungsmitteln (4) unterbrochen ist.

11. Vorrichtung nach einem der vorhergehenden Ansprüche, umfassend ein Element (30), um das Paar von festen Nahrungsmitteln (1, 1'), die nebeneinander platziert sind und vom ersten (3a) und zweiten (3b) Kanal eingehen, nah an die Beabstandungsmittel (4) positioniert zu schieben, wobei das Schiebeelement (30) ausgelegt ist, um das von den Beabstandungsmitteln (4) beabstandete Paar von festen Nahrungsmitteln (1, 1') abzufangen und hinführend zu einem Einwickelgerät (5) synchron mit diesem zu schieben.

## Revendications

1. Dispositif d'alimentation et de rangement de produits alimentaires solides (1) pour une machine d'emballage de produits alimentaires solides (1), en particulier de cubes de bouillon pressés de forme cubique ou parallélépipédique, ledit dispositif (100) comprenant :
- un transporteur motorisé (2) pour accumuler et transporter des produits alimentaires solides (1) ;
- une unité de transit (3) pour le transit contrôlé des produits alimentaires solides (1) arrivant du transporteur motorisé (2) pour accumuler et transporter les produits alimentaires solides (1) ; l'unité de transit (3) définissant un parcours de transit le long d'une direction d'alimentation (A) des produits alimentaires solides (1) d'une première extrémité d'entrée à une deuxième extrémité de sortie ou de libération des produits alimentaires solides (1) ;
- des moyens d'espacement (4) pour espacer les produits alimentaires solides (1) qui sont proches et en aval de l'extrémité de sortie ou de libération de l'unité de transit (3) ;
dans lequel l'unité de transit (3) comprend :
- un panneau stationnaire (6) se prolongeant au moins entre la première extrémité d'entrée et la deuxième extrémité de sortie ou de libération des produits alimentaires solides (1) et étant parallèle à la direction d'alimentation (A) ;
**caractérisé en ce que** l'unité de transit (3) comprend de plus :
- une première (7) et une deuxième (8) courroie de traction, comprenant une première (7a) et une deuxième (8a) branches actives respectives positionnées l'une en face de l'autre parallèlement l'une à l'autre et en correspondance des côtés opposés du panneau (6), formant avec le panneau un premier (3a) et un deuxième (3b) canal de transit adjacents respectifs pour une rangée respective de produits alimentaires solides (1, 1'), chaque première (7a) et deuxième (8a) branche active étant configurée pour tirer la rangée respective de produits alimentaires solides (1, 1') d'une manière coulissante contre le panneau (6) ; chaque première (7) et deuxième (8) courroie comportant une unité d'entraînement indépendante (9, 10) ;
- une unité de commande (11) reliée aux unités d'entraînement indépendantes (9, 10) de la première (7) et de la deuxième (8) courroie et capable de modifier les vitesses d'alimentation respectives de la première (7) et de la deuxième (8) courroie, de manière à permettre une alimentation contrôlée de la rangée respective de produits alimentaires solides (1, 1') transitant dans le premier (3a) et le deuxième (3b) canal respectif, ladite unité de commande (11) étant programmée de manière à ce que les produits alimentaires solides (1, 1') qui se trouvent à la fin de la rangée respective soient placés avec une surface frontale respective reposant sur un plan vertical commun, de manière à permettre aux moyens d'espacement (4) d'espacer simultanément une paire de produits alimentaires solides (1, 1') se faisant face et provenant du premier (3a) et du deuxième (3b) canal.

2. Dispositif selon la revendication 1, dans lequel le panneau (6) est positionné à égale distance de la première (7a) et de la deuxième (8a) branche active de la première (7) et de la deuxième (8) courroie de traction, respectivement.

3. Dispositif selon la revendication 1 ou 2, dans lequel l'extension, en longueur (L) du panneau (6) est supérieure à la longueur du parcours de transit.

4. Dispositif selon l'une quelconque des revendications précédentes, dans lequel l'unité de commande (11) comprend un premier (12) et un deuxième (13) capteur pour détecter sa position le long du premier (3a) et du deuxième (3b) canal, respectivement, et qui est capable de détecter la position de chaque produit alimentaire solide (1, 1') qui passe à travers, respectivement, le premier (3a) et le deuxième (3b) canal.

5. Dispositif selon la revendication 4, dans lequel lesdits premier (12) et deuxième (13) capteurs sont positionnés à proximité de la première extrémité d'entrée du parcours défini par le premier (3a) et le deuxième (3b) canal respectifs.

6. Dispositif selon l'une quelconque des revendications précédentes, dans lequel l'unité de commande (11) comprend un troisième (14) et un quatrième (15) capteur pour détecter la position à proximité de l'extrémité de sortie ou de libération, respectivement, du premier (3a) et du deuxième (3b) canal, et qui est capable de détecter la position de chaque produit alimentaire solide (1, 1') à l'extrémité de sortie ou de libération, respectivement, du premier (3a) et du deuxième (3b) canal.

7. Dispositif selon l'une quelconque des revendications précédentes, comprenant une paire de tampons (16), chaque tampon (16) de ladite paire de tampons étant positionné en aval et en extension des première (7a) et deuxième (8a) branches actives, respectivement, des première (7) et deuxième (8) courroies, et en amont des moyens d'espacement (4) par rapport à la direction d'alimentation (A) ; chaque tampon (16) ayant une surface configurée et positionnée pour entrer en contact avec les produits alimentaires solides (1, 1') quittant le premier (3a) et le deuxième (3b) canal afin de ralentir l'alimentation du produit alimentaire solide (1, 1'), par opposition au panneau (6).

8. Dispositif selon l'une quelconque des revendications précédentes, dans lequel chaque première et deuxième courroie (7, 8) est fermée dans une boucle autour d'au moins une paire de poulies (17, 18) dont une poulie étant reliée à l'unité d'entraînement relative (9, 10) ; des éléments de contact (19) étant positionnés en contact avec la courroie (7, 8), sur le côté intérieur, c'est-à-dire le côté qui n'est pas en contact avec les produits alimentaires solides (1, 1'), de la première (7a) et de la deuxième branche active (8a).

9. Dispositif selon l'une quelconque des revendications précédentes, dans lequel les moyens d'espacement (4) comprennent au moins une paire de roues (20, 21) positionnées sur les côtés opposés d'une zone d'espacement ; chaque roue (20, 21) étant équipée d'une tête circonférentielle (22) configurée pour entrer en contact avec une surface latérale de la paire de produits alimentaires solides (1, 1') se faisant face et provenant du premier (3a) et du deuxième (3b) canal, de manière à accélérer le mouvement d'alimentation de la paire de produits alimentaires solides (1, 1') touchés par les deux têtes (22) et à espacer la paire de produits alimentaires solides (1, 1') en contact avec les deux têtes (22) des autres produits alimentaires solides (1, 1') encore en transit dans le premier (3a) et le deuxième (3b) canal.

10. Dispositif selon l'une quelconque des revendications précédentes, dans lequel ledit panneau (6) est interrompu en correspondance des moyens d'espacement (4) .

11. Dispositif selon l'une quelconque des revendications précédentes, comprenant un élément (30) pour pousser la paire de produits alimentaires solides (1, 1') placés côte à côte et provenant du premier (3a) et du deuxième (3b) canal positionné à proximité des moyens d'espacement (4) ; ledit élément de poussée (30) étant configuré pour intercepter ladite paire de produits alimentaires solides (1, 1') espacée par les moyens d'espacement (4) et la pousser vers un appareil d'emballage (5) en synchronisation avec ce dernier.
